(19) Europäisches Patentamt

European Patent Office

Office européen des brevets

(11) **EP 0 959 470 B1**

(12) **EUROPEAN PATENT SPECIFICATION**

(45) Date of publication and mention
of the grant of the patent:
**27.07.2005 Bulletin 2005/30**

(51) Int Cl.[7]: **G11B 20/10**, G11B 5/02,
G11B 5/09

(21) Application number: **99303793.6**

(22) Date of filing: **14.05.1999**

(54) **Calibrating write pre-equalisation in a data storage device**

Kalibrierung der Schreib-Vorentzerrung in einer Datenspeicheranordnung

Calibrage d'égalisation d'ecriture dans un dispositif de stockage de données

(84) Designated Contracting States:
**DE FR GB NL**

(30) Priority: **19.05.1998 EP 98303939**

(43) Date of publication of application:
**24.11.1999 Bulletin 1999/47**

(73) Proprietor: **Hewlett-Packard Company,
A Delaware Corporation
Palo Alto, CA 94304 (US)**

(72) Inventors:
• **Brown, Andrew David
Clifton, Bristol BS8 1JP (GB)**
• **Chandler, Simon John
Dursley, Gloucestershire GL11 6HY (GB)**

(74) Representative:
**Lawman, Matthew John Mitchell et al
Hewlett-Packard Limited,
IP Section,
Building 3,
Filton Road
Stoke Gifford, Bristol BS34 8QZ (GB)**

(56) References cited:
**EP-A- 0 651 373      US-A- 5 333 081
US-A- 5 339 202      US-A- 5 550 502**

• **PATENT ABSTRACTS OF JAPAN vol. 097, no.
012, 25 December 1997 (1997-12-25) & JP 09
219004 A (HITACHI LTD;HITACHI COMPUT ENG
CORP LTD; HITACHI COMMUN SYST INC), 19
August 1997 (1997-08-19)**
• **PATENT ABSTRACTS OF JAPAN vol. 096, no.
012, 26 December 1996 (1996-12-26) & JP 08
212503 A (ROHM CO LTD), 20 August 1996
(1996-08-20)**

## Description

### Field of the Invention

The present invention relates to improvements to an apparatus for writing data to a magnetic tape data storage device for improving the rate at which data may be written to tape, and particularly although not exclusively to a calibration method for such an apparatus.

### Background to the Invention

In a conventional magnetic data storage system it is known to store digital data from a host device, eg a computer. It is known to store digital data to a magnetic disk or tape by switching the polarity of current through a magnetic write head which is in close proximity to a magnetic media. Conventionally, the magnetic media may comprise a flexible elongate tape which is coated with a magnetic material and which is wound between two reels past a magnetic write head. Alternatively, the magnetic media may also comprise a rigid disk which is coated with a magnetic medium and data is recorded to the disk by moving a recording head in a radial direction across the disk while the disk is rotated about its center.

In tape-based magnetic data recording systems, data may be recorded using a plurality of write heads and is read with a plurality of read heads. Conventionally, these write and read heads may be either substantially stationary with respect to the rest of the device in which case data are stored in a plurality of tracks parallel to the elongate direction of the tape or the write and read heads may be mounted on a drum which is rotated about an axis at an angle to the elongate direction of the tape, in which case the data are stored in a series of tracks diagonally across the magnetic tape.

Conventionally, recording heads are fabricated from ferrite which is a sintered combination of a ferro magnetic material and a ceramic combined to yield a material with the high magnetic permeability of the former and the high electrical resistance of the latter. However, writing data to magnetic media using ferrite heads becomes more inefficient at high data bit-rates. At high frequencies the losses due to irreversible heating of the write head results in a roll-off of the output of the write head for a given input current.

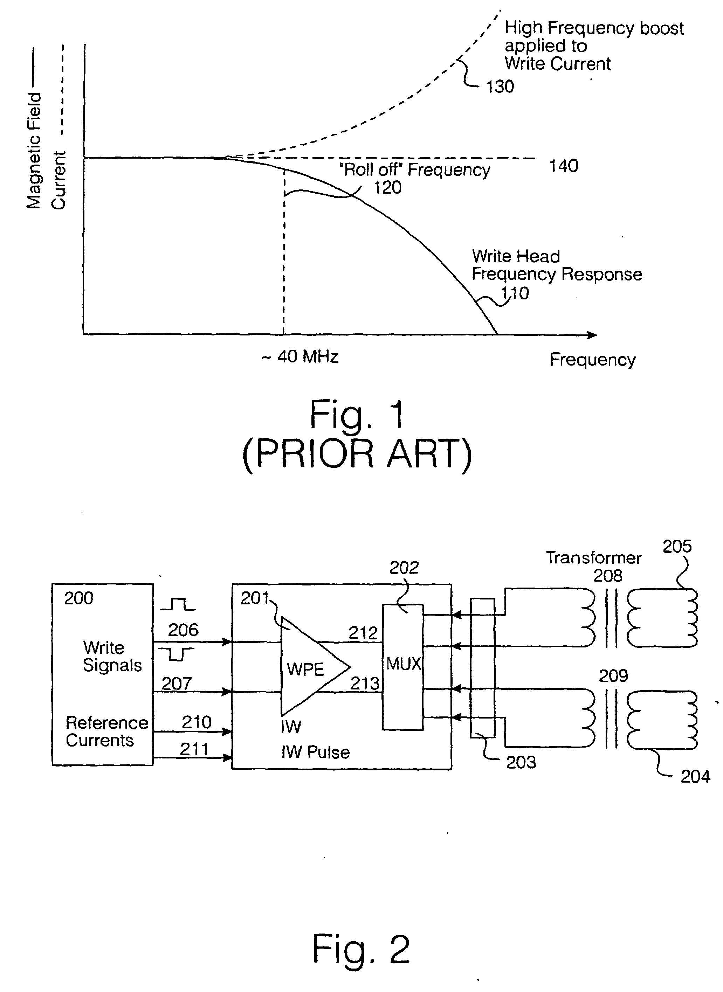

Referring to Fig. 1 herein , there is illustrated by a solid line 110 a plot indicating how an output signal of a ferrite write head decreases as the frequency of a driving write current signal of constant amplitude increases. The output signal for a given input current drops significantly at a "roll off" frequency 120 which is, typically of the order 30 - 40 MHz. This limits an effective maximum write rate of the ferrite head to the order 80 MBits/s. It is known to attempt to correct for this roll off in the frequency response of a write head by preferentially boosting high frequencies in the write current according to a curve such as illustrated by a dashed line 130 in Fig. 1. Preferentially boosting high frequencies in the write current signal driving the write head to compensate for the decrease in efficiency of the write head should yield an approximately flat frequency response as illustrated by the dot dashed line 140 in Fig. 1. This technique of boosting the high frequencies is conventionally known as "Write Pre-Equalization" (WPE) . However, write drivers in digital magnetic data stored systems are highly non-linear devices. Conventional write drivers comprise switches which send two polarities of current to the write heads in order to record two distinct magnetization states on the magnetic media. Hence, any prior art attempts to boost high frequencies in such devices have been complex. In particular, Ampex produced a write pre-equalization scheme which comprised a linear amplifier current driver i.e. the output signal of the write driver was proportional to the input signal to the write driver. Having produced a linear write driver, the Ampex scheme applied a boost to the frequency response of the write driver to compensate for the frequency response to the write head. However, the Ampex implementation of write pre-equalization required substantial power, typically of the order 15 Watts, and could only be produced using discrete components. Hence it is not possible to implement this as a single application specific integrated circuit (ASIC). In addition, the Ampex scheme was also difficult to set up.

In addition to the roll-off in the frequency response of a recording head at high frequencies as described hereinbefore there is another, more significant, effect resulting from a finite rise time of a magnetic field generated by a record head in response to a substantially step-like change in a recording current driving said record head. In response to a, for example, positive going edge of a driver current the resulting magnetic field starts to increase in magnitude with what we shall call a postive sign. In response to a following negative going edge in the recording head driver current the magnetic field will first reduce in magnitude from a large positive value, will become zero and will then increase in magnitude with a negative sign. The changes in magnetic field do not occur instantaneously, but do so with a finite risetime, for example, 7 nanoseconds (ns).

The magnetization of the medium changes direction during the time that the magnetic field is increasing in magnitude from zero. If, at the time of the negative going edge in the recording head driver current, the magnetic field has not yet risen to its steady-state level then the next magnetic transition occurs slightly earlier than if the magnetic field had been at (or closer to) the steady-state level. This causes the physical location on a magnetic data storage medium at which the magnetization of the medium changes direction to be "advanced", or moved closer to the previous transition. Hence, positions of magnetic field transitions on a magnetic data storage medium may be laterally displaced. This lateral displacement of magnetization on the magnetic recording medium is also known herein as "bit shift", "peak shift" and "transition shift".

The size of the transition shift depends in a non-linear way on the magnetic field level when last current transition occurred, and hence on the duration of the previous current pulse relative to the finite risetime of the record head's magnetic field.

The effect of these non-linear lateral displacements of regions of magnetization on magnetic recording media can result in timing errors during a subsequent read operation of data stored on the storage medium and may result in an increase in the number of errors occurring during the read operation.

The ongoing pressure in the development of new magnetic data storage systems is to increase the data storage capacity of any said data storage media. By increasing the effective bandwidth of the write head in a magnetic data storage system it is possible to increase the bit rate at which data is written to, for example, magnetic tapes and hence increase the storage capacity of the tape. There is a need for a means to increase the bandwidth of magnetic recording heads in a way which can be implemented as an ASIC and which is straightforward to both calibrate and use.

In the applicant's co-pending application "Double Pulse Write Driver" filed concurrently with this application, there is disclosed a method and apparatus for compensating for the roll-off and peak shift in magnetic flux of a record head. In such a method and apparatus, there exists a problem of optimizing the compensation means to minimise the number of errors occurring whilst reading data during a send operation.

**Summary of the Invention**

Specific embodiments and methods according to the present invention aim to provide a method for set up and optimization of a means of compensating for a frequency response roll-off in a write channel of a magnetic data storage system.

Specific methods according to the present invention, recognize that increasing the higher frequency content of signals sent to a magnetic write head to compensate as accurately as possible for the reduced magnetic flux at higher frequencies, may result in an improved effective bandwidth of the write channel and consequently increase the maximum effective data write rate achievable with such data storage systems

According to a first aspect of the present invention there is provided a method of optimising a write channel in a data storage device, said write channel comprising:

a first current source operable to generate a first current signal of a first current amplitude;
a delay device operable to produce a delay signal delayed by a delay period;
a second current source operable to generate a second current signal of a second current amplitude; and
a write head having a frequency roll off characteristic,

wherein each of said first amplitude, said delay period and said second amplitude are variable, said method comprising the steps of:

(i) varying a single said variable through a plurality of values whilst maintaining other ones of said variables at fixed values;
(ii) for each said value of said plurality of values, determining a quality metric of a corresponding said output signal of said write channel; and
(iii) selecting a said value of said plurality of values which produces a said write channel output having an optimum quality metric.

Preferably, each of said first amplitude, said delay period and said second amplitude are independently variable.

During the optimization process, said output signal of said write channel is produced in response to an input test signal, and suitably, said method comprises performing said steps (i), (ii) and (iii) for each of a plurality of test signals.

According to another aspect of the present invention there is provided a data storage device to write data to a data storage medium, said data storage device having a write channel comprising:

a first current source capable of generating a first current signal of a first variable amplitude in response to input data signals;
a delay device capable of delaying said data signals by a variable delay period;
a second current source capable of generating a second current signal of a second variable amplitude, in response to said delayed data signals;
a means for combining said first and said second current signals;
a write head for writing said combined first and second current signals to said data storage medium;
means for optimising said write channel such that a frequency content of said combined first and second current signals at least partially compensates for a frequency response roll off of said write head, said optimisation being effected by individually optimising each of said variables of said first current amplitude and said current amplitude, and said delay period.

Preferably, each said variable is adjustable independently of each other said variable. Advantageously, said low frequency test signal comprises a "4T" pattern.

Said quality metric may comprise a signal-to-noise ratio, or bit error rate.

Suitably, said predetermined value of delay is set in the range $^1/_5$ to $^4/_5$ of the minimum bit period at which said data are written to said data storage medium and suitably at around $^1/_3$ of said minimum bit period.

Suitably, said predetermined value of delay is set in the range 1.8 to 7.2 nanoseconds and suitably at around 3.5 nanoseconds. Said predetermined value of delay in the best mode, lies within the range 1.8 to 7.2 nanoseconds.

Suitably, said mixed frequency test signal comprises a pseudo random pattern.

Suitably, said mixed frequency test signal comprises a "1T" bit pattern.

The invention includes a method of writing data to a data storage medium, through a write channel comprising a first transconductor, a delay device and a second transconductor, said method comprising the steps of:

receiving said data from a data source;
writing said data to a first transductor, wherein a degree of amplification of said first transductor is varied;
writing said same data to a delay device, wherein a delay time introduced by said delay device is varied;
writing said delayed data to a second transductor, wherein a degree of amplification of said second transductor is varied;
combining outputs of said first and said second transductors;
writing said combined outputs to said data storage medium;
individually optimising each said variable in response to a measure of quality of said combined outputs as written to said data storage medium such that said write channel produces an optimum data rate.

To perform said step of optimization, said data is preferably replaced by a test signal. A frequency of said test signal is varied.

Preferably, said step of optimizing said variables comprises the steps of:

(a) setting said degree of amplification of said first transductor to a minimum value;

(b) setting said delay time introduced by said delay device to a. minimum;

(c) setting said degree of amplification of said second transductor to a minimum value;

(d) recording a low frequency test signal to said data storage medium;

(e) reading said low frequency test signal from said data storage medium;

(f) monitoring a measure of said quality of said writing of said low frequency test signals;

(g) varying said degree of amplification of said first transductor over a range of degrees of amplification;

(h) repeating steps d, e, f above at said varied degrees of amplification of said first transductor;

(i) selecting an optimum degree of amplification of said first transductor depending on a result of step f;

(j) setting said delay time of said delay device to a predetermined value;

(k) recording a mixed frequency test signal to said data storage medium;

(l) reading said mixed frequency test signal from said data storage medium;

(m) monitoring a measure of a quality of a said read mixed frequency test signal;

(n) varying said degree of amplification of said second transductor over a range of degrees of amplification;

(o) repeating steps (k), (l), (m) for each of a set of degrees of amplification of said second transductor; and

(p) selecting an optimum value of said degree of amplification of said second transductor as a result of step (m).

The data storage medium may comprise a magnetic tape, a magnetic disk or the like.

**Brief Description of the Drawings**

For a better understanding of the invention and to show how the same may be carried into effect, there will now be described by way of example only, specific embodiments, methods and processes according to the present invention with reference to the accompanying drawings in which:

Fig. 2 illustrates schematically a block diagram of part of a write channel of a data storage device described herein;

Fig. 3 illustrates schematically how a main driver current and a delayed inverted driver current are summed to produce a modified write driver current according to a specific implementation of the present invention;

Fig. 4 illustrates schematically means for implementation of a summation of a main driver current with an inverted delayed version of the main driver current according to a specific embodiment of the present invention;

Fig. 5 illustrates schematically a circuit comprising a write driver according to a specific embodiment of the present invention;

Fig. 6 illustrates schematically a set of logic signals WD, WD_inv, WD_DEL and WD_DEL_inv which are input to a set of buffers, and a time delay t_delay between the two sets of logic signals according to a specific implementation of the present invention;

Fig. 7 illustrates schematically signal processing steps for data signals passing through a write channel according to a specific method of the present invention;

Fig. 8 illustrates schematically a tape data storage device according to the best mode presented herein, being configurable to generate and write test signals to tape, re-record test signals on tape and measure quality metrics characterizing the write process;

Fig. 9 illustrates schematically 1T, 2T, 3T, 4T and pseudo-random bit patterns, the pseudo-random and 4T patterns being used in calibrating the write pre-equalisation circuit according to a specific implementation of the present invention;

Fig. 10 illustrates schematically steps involved in calibrating the write channel of a data storage device at low frequencies according to a specific method of the present invention; and

Fig. 11 illustrates schematically steps involved in calibrating the write channel of a data storage device using a pseudo-random test signal according to a specific method of the present invention.

## Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

Specific methods according to the present invention described herein may be particularly suited to magnetic tape recording devices having a rotating read/write head in which an elongate tape is drawn past the head and the read/write heads rotate about an axis aligned at an angle to the direction of the tape motion. However, the generality of the present invention described herein is limited in scope only by the essential features according to the claims herein.

In particular, the best mode herein relates to a Digital Data Storage system (DDS) based on the digital audio tape system (DAT) being a helical scan system. The tape data storage system presented herein may advantageously implement one particular version of the DDS system namely the DDS4 standard which is still under development. However, it will be understood by those skilled the art that the methods and apparatus disclosed herein are not restricted to systems having rotating heads or to systems where digital data are stored on tape.

Referring to Figs. 2 to 4 herein, there is illustrated schematically a device which records digital data onto magnetic tape using two write heads mounted on a rotating drum. A channel ASIC 200 provides a source of logic signals which are to be recorded on to a tape according to the best mode presented herein. The channel ASIC 200 converts a stream of digital data from the host device into streams of digital data write signals 206 and 207 with appropriate voltage levels to input into a write driver 201. Data stream 207 is an inverted version of data stream 206.

The process of inverting a digital signal comprises replacing every instance of the digital signal which represents binary digit "0" with a digital signal that represents binary digit "1" and replacing every instance of the digital signal which represents a binary digit "1" with a digital signal representing binary digit "0". The voltage levels output by channel ASIC 200 conform to the voltage levels conventionally used in known pseudo emitter coupled logic (PECL). The two logic states are typically represented by a differential voltage swing of 1V peak-to-peak. PECL has, typically, the same differential voltage swings as conventional emitter coupled logic (ECL) but have been translated by +5V. PECL is a well known way of transferring logic signals where the timing of such signals is critical.

The write signals 206 and 207 are input to the double pulse write driver 201. The write driver 201 outputs conventional write current signals set by extemal reference currents 210 and 211. Write currents 212 and 213 output from write driver 201 have an extra narrow pulse of current added on each transition according to one aspect of the present invention. The width of this narrow current pulse is set by an external reference current and an extemal resistor or capacitor. The write current 212 and 213 are input to a multiplexor 202 which switches the write current between the two write heads 204 and 205 via a coupling 203 and transformers 208 and 209. The coupling 203 comprises a connection between the physical location of the double pulse write driver as described herein and either the transformers 208 and 209 or the write heads 204 and 205.

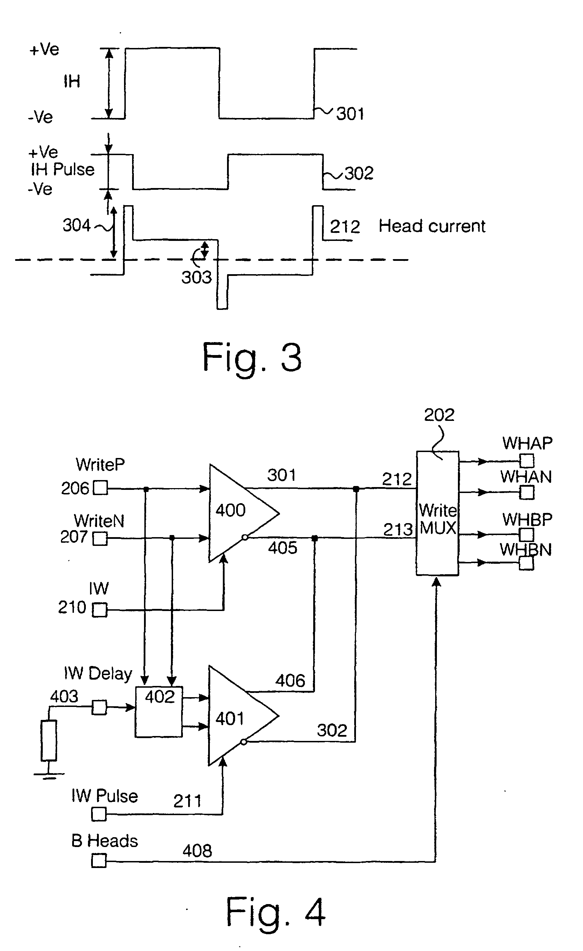

Referring to Figs. 3 and 4 herein, there is illustrated schematically write signals combined to produce modified write signal 212 configured according to one aspect of the present invention described herein to compensate for high frequency roll off of a write head. Driver current 301 is produced by a first transconductor circuit 400 which produces two write output signals in response to two input signals. The output signals of the first transconductor are amplified versions of the write signals 206 and 207 input into first transconductor 400. The input signals are also input to a delay unit 402, the outputs of the delay unit being input to a second transconductor 401. Write signals 206, 207 input to first and second transconductors respectively each comprise a digital logic voltage signal. Outputs of the first and second transconductors comprise current signals. Each transconductor comprises a buffer, a switch and a current amplifier source, the combination of buffer, switch and current amplifier source operating to receive a said voltage logic signal and output a current pulse drive signal of predetermined and controlled current value. To the main driver current 301 is added an inverted and delayed driver current 302. The amplitude of the pulses in the driver current and delay current are represented in Fig. 3 herein as IH and IH_delayed, respectively. The amplitudes of main driver current 301 and delayed current driver 302, IH and IH_delayed respectively, are set by the reference currents 210 and 211 and may be preset. The driver current 301 and delayed current 302 are added to produce a modified write signal 212, head current. The effect of adding the delayed inverted current 302 to driver 301, if IH_delayed is less than IH, is to produce a respective double pulse current spike corresponding to each transition of the main driver current. The double pulse comprises a narrow pulse which has a positive going edge which is coincident with a positive going edge of the driver current 301 followed by a pulse spike having a lower amplitude but being of longer duration. At each negative going edge of the main driver current there is a coincident negative going narrow pulse in the sum current. The positive going and negative going narrow pulse spikes are of a same duration.

The narrow pulse which is also known herein as the pulse current I_pulse has an amplitude 304 which is equal to

$$\frac{(IH+IH\ delayed)}{2}$$

similarly, the pulse spike having a lower amplitude having a lower amplitude but being of longer duration which is also known herein as the main current or I_main has an amplitude 303 which may be represented by the following equation

$$\frac{(IH-IH\ delayed)}{2}$$

According to the best mode presented herein, both the pulse current and main current are independently adjustable to produce an optimum performance of the write pre-equalisation.

Taking the Fourier transform of the narrow and broad pulse components of the sum head current 212 it will be understood that the narrow pulse contributes significantly to the high frequency components of the sum (head) current 212. These additional high frequency components in the write current partially compensate for the roll-off in the frequency response of the write head at approximately 40 MHz. According to the best mode presented herein, the additional high frequency components added to the write current result in an improved effective bandwidth of the write heads, and as a result may increase the roll off in the response of the write channel as a whole, including the write head, from approximately 40 MHz up to approximately 80MHz.

Additionally, the addition of an initial narrow pulse at a positive going edge of a pulse of the sum head current may be configured such that, irrespective of the duration of the head pulse ie 1T, 2T, 3T or 4T, the magnetic field generated across the head gap of the recording head is at a substantially same value whenever a negative going edge of the sum head current is encountered. Ensuring that a decreasing magnetic field in the recording head gap always starts from a substantially same value of field strength allows the occurrence of "bit shift" as described hereinbefore to be minimized. The initial narrow current pulse results in a more rapidly increasing magnetic field than in the case of a conventional driver current pulse. The more rapid increase in the magnetic field generated in response to the sum head current is to ensure that the resulting magnetic field is at a correct, pre-determined level in time for a negative going edge of a sum head current to initiate a decrease in magnetic field.

Referring to Fig. 4 herein, there is illustrated schematically, in more detail the double pulse write driver 201 and multiplexer 202. According to the best mode presented herein, the double pulse write driver and multiplexer are implemented on a single application specific integrated circuit (ASIC). The two logical signals WriteP 206 and WriteN 207 from Channel ASIC 200, are written to amplifier 400. In addition, logical signals writeP 206 and writeN 207 are written to delay unit 402. The delay circuit stores and delays logical signals 206 and 207 for a short period of time. The delay period is designed to be easily adjustable and calibrated either by changing the value of a single resistor or capacitance external to the ASIC. In the best mode presented herein, where the write head roll-off frequency is typically of the order 30-40 MHz, the optimal time by which the logical signals should be delayed is found to be of the order of 3.5 ns where the bit period is 9 ns. The delayed logical signals are written to transconductor 401. In the best mode presented herein, transconductors 400 and 401 have substantially similar properties. Transconductors 400 and 401 are both conventional. The electronic circuitry comprising amplifier 401 is preferably a direct copy of the electronic circuitry comprising amplifier 400. One advantage of the best mode described herein is that it is straight forward to implement the invention in an integrated circuit using known techniques.

The delayed logical signals are read out from amplifier 401 and are combined with the output of transconductor 400 prior to sending to write multiplexer 202. The output signals of second transconductor 401 and first transconductor 400 are combined in the following manner. The driver current 301 is added to delayed current 302 and inverted delayed driver current 406 is added to delayed driver current 405 yielding the respective head currents 212 and 213 which are used to drive the write heads.

The head current 212 and its inverted counterpart 213 are written to the write multiplexer 202. The write multiplexer switches the sum currents 212 and 213 between two write heads according to switching signals 408. Write current 212 is switched between inputs WHAP and WHBP which correspond to the two write heads 204 and 205. Similarly, write current 213 are switched between inputs WHAN and WHBN. In this specification a "write pass" is defined as a single passage of the tape past a write head for writing onto a single track, irrespective of whether the tape speed varies, or whether the tape stops during a pass. A write pass may comprise a sequence of writes which cause data to be written in a sequence along one or more tracks, which are themselves written in sequence. Whilst a write channel serving two write heads is shown in the best mode herein, the invention applies equally to a write channel having a single write head, or any other plurality of write heads.

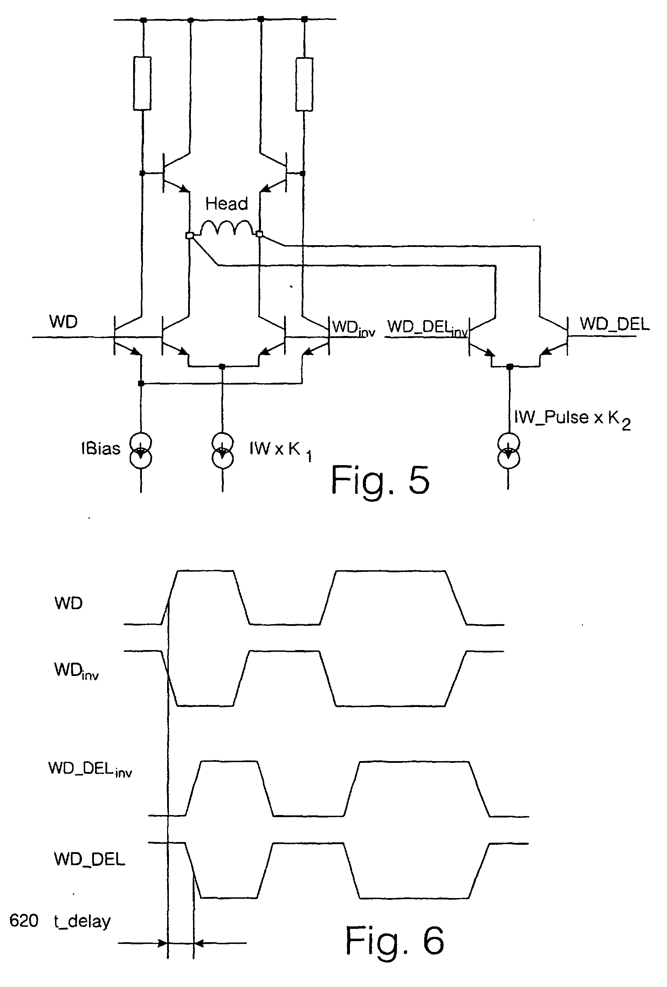

Referring to Fig. 5. herein, there is illustrated schematically an example of an H-Bridge write driver circuit according to the best mode presented herein. The input signals WD and $WD_{inv}$ correspond with the logical signals 206 and 207 respectively. The outputs of the H-Bridge circuit comprise the driver currents 301 and 405. In addition, there is included an additional H-Bridge circuit according to the present invention described herein. The additional H-Bridge circuit receives the delayed logical signals WD_DEL and $WD\_DEL_{inv}$ which are the delayed versions of logical signals 206 and 207 respectively after having been read from the output of delay unit 402.

The amplitudes of the driver currents 301 and 405 and the delayed driver currents 406 and 302 which are combined before sending to the write heads are set by reference current IW x K1 and IW-Pulse X K2. K1 and K2 are constants chosen to ensure that driver currents 301 and 405 have larger amplitudes than the delayed currents 406 and 302.

Referring to Fig. 6 herein, there is illustrated schematically driver currents signals WD, $WD_{inv}$, and delayed currents WD_DEL and $WD\_DEL_{inv}$. The time delay introduced by delay unit 402 is indicated by t_delay 620. As indicated in Fig. 6 the driver currents signals have a finite rise time which is the time taken for the current to change from the value representing binary digit "0" to the current representing binary digit "1". The same finite transition time is observed for the transition from binary digit "1" to binary digit "0". One of the key requirements of the write driver is to minimize the rise time of the driver currents. Typical values of the expected range in write current according to the best mode herein are 30 mA to 100 mA. Typically, a write head having inductance of the order 100 to 200 mH may be used.

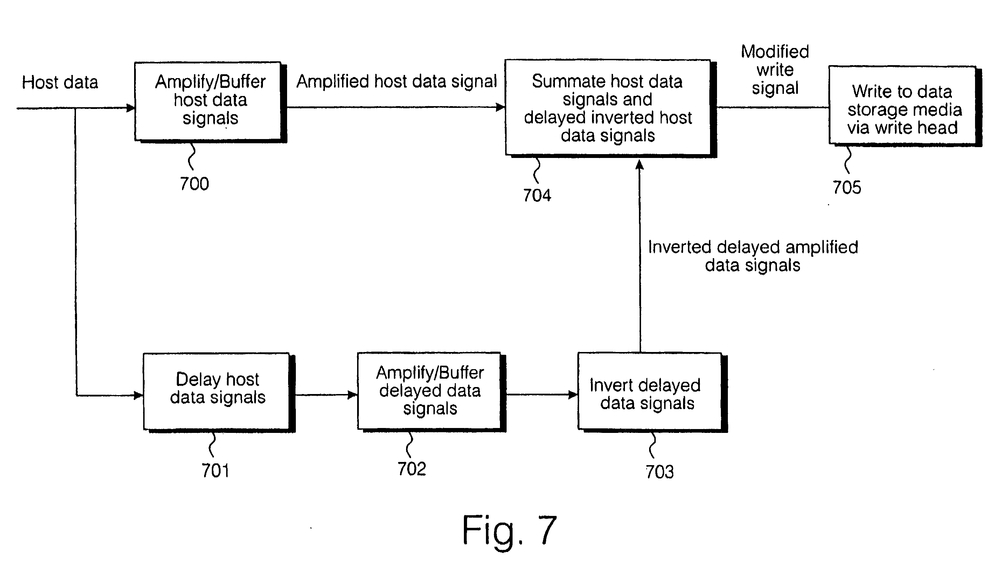

Referring to Fig. 7 herein, there is illustrated schematically a signal processing diagram for processing of the host data signals into a form which includes frequency components which compensate for a higher frequency roll off of the ferrite write head. Incoming host data signals in the form of bit pulses are split into first and second signal paths, the first path being amplified/ buffered in first transconductor 400 by a first degree of amplification 700. The second signal path of host data signals is delayed by delay device 402 for a predetermined delay period, which may be varied by adjustment. The delayed host data signals are amplified/buffered in second transconductor 401, which also inverts the delayed host data signals and amplifies the host data signals by a second degree of amplification, the second degree of amplification being less than the first degree of amplification. The inverted delayed data signals are summed 704 with the amplified host data signal to produce a modified write signal as illustrated by sum (head) current 212 in Fig. 3 herein. The modified write signal is of the form described hereinabove, containing a relatively short higher amplitude pulse current on a leading edge of each main current pulse, which introduces higher frequency components which compensate for a higher frequency roll off of the write head. The modified data write signal is written to the tape data storage medium via the write head 705. Since the introduction of higher frequency components into the modified data write signal compensates for a frequency response roll off of the write head, the resultant data signals written to the tape data storage medium may be better defined and have a better signal to noise ratio and/or a lower bit error rate than in the prior art case.

The write driver, according to the best mode presented herein, addresses the problem of the roll-off in the frequency response of ferrite recording heads in magnetic data storage devices. However, the write driver described herein requires that three separate variables, amplitude of the pulse current I_pulse 304, the amplitude of the main current I_main 303 and the width of the pulse current t_delay 620 are all chosen so as to optimize the effective frequency response of the write channel using the WPE method and apparatus scheme described.

The process of calibrating a write driver requires optimizing the operation of the write driver such that, for example, the number of errors occurring when data are written to tape are minimized. Conventional write drivers have typically only one variable to optimize during a calibration process. Such a calibration process would conventionally comprise writing data to tape, then reading the data from tape and analyzing a quality metric which is a measure of the quality of the writing process. The quality metric may be typically a measure of the bit error rate, ie the proportion of incorrectly written bits of data introduced during the write operation. Such bit error rates in prior art schemes are, before error correction, of the order 1 in $10^5$ - $10^6$ bits in tape drives, whilst bit rate errors incurred in write operations in disk drives are typically lower than for tape drives. Another quality metric typically used to assess the write operation in writing data to a data storage medium is signal-to-noise ratio. In a conventional calibration process, bit error rate (BER) and/or signal-to-noise (SNR) are used to assess a write operation. In conventional write drivers, calibration can involve writing standard signals to tape while sweeping a single variable through all possible values of that variable whilst monitoring a quality metric of the resulting written data.

However, the write driver described herein operates a modified data write signal as illustrated in Fig. 3 herein having a head current a pulse current of a first amplitude and duration followed by a second portion by a main current of a second amplitude and duration. To produce such a modified signal, three variables are present, being an amplitude of the pulse current I_pulse 304, a width of the pulse current t_delay 620, and an amplitude of the main current signal I_main 303. With three independent variables, calibration of the driver circuitry to produce optimized performance becomes a complex problem to solve. If there are of the order 10 possible values of each of the variables then there are of the order $10^3$ possible calibration points. Typically, finding the optimal value of any one variable can take of the order of a few seconds. Therefore, searching for one out of $10^3$ points could potentially take of the order $10^3$ seconds. Even using efficient algorithms, finding the optimal values of three variables would still require an unrealistically long timescale when applied to production of tape drive devices. Calibration of data storage devices is a process which must be applied to each individual data storage device and possibly repeated throughout the lifetime of such devices in order to compensate, for example, for small changes in the values of the components in the write channels and for changes in the characteristics of the recording heads. Given the frequency with which the calibration process is performed it is important to develop a calibration process which reduces the time required to find the optimal values of the three variables in the WPE method described herein to a minimum.

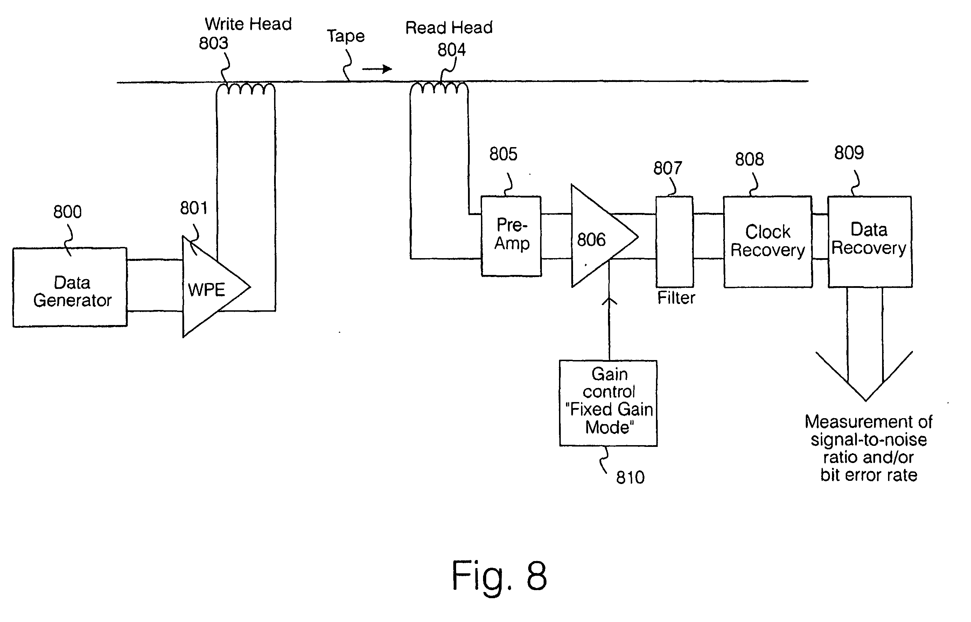

Referring to Fig. 8 herein, there is illustrated schematically a tape data storage device configured to write data to an elongate tape using a write head 803 and to recover said data from tape using a read head 804. The tape data storage device as illustrated in Fig. 8 is configured to write a plurality of test signals to tape via a write channel, read the test signals from tape via a read channel and measure a quality metric of the write operation according to the present invention described herein. Data generator 800 feeds logic signals to WPE write driver 801 which drives the write head 803 as described herein before. During the calibration procedure described herein, a plurality of data patterns generated by data generator 800 are written to tape. The plurality of data patterns are test signals which can be used to yield a quality metric of the writing process. The test signals written to tape are read back from tape using read head 804. The signals read off tape pass through preamplifier 805, variable gain amplifier 806 which is set to "fixed gain" mode, filter 807, clock signal recovery stage 808, and data recovery stage 809. In the best mode described herein, during the calibration procedure, the variable gain amplifier 806 in the read channel is set to "fixed gain" mode which means that the amplification applied to test signals read back from tape is substantially constant with frequency. Having the read channel set to a known characteristic it is then possible to optimize the write channel by examining the quality metrics of bit error rate (BER) and/or signal-to-noise ratio (SNR), for a set of test signals comprising a plurality of frequencies.

The calibration method described herein comprises optimizing the write channel to write low-frequency signals to tape and then optimizing the write channel whilst writing mixed frequency signals to tape. Referring again to Fig. 1 herein, an objective of calibration of the compensation means is to approximate an optimum high frequency amplification applied to the write current as shown by the dotted line in Fig. 1 as closely as possible by variation of the three variable parameters of main drive current signal amplitude, delay period and delayed main drive current signal amplitude. A correctly calibrated WPE driver adjusted to accurately compensate for the high frequency roll off of a write head should yield a substantially same value of quality metrics when writing both low frequency data, which is unaffected by the roll-off of the recording head, and high frequency data, which is subject to the high frequency roll off of the write head.

Another objective of calibration of the compensation means is to ensure that a changing magnetic field generated by a record head in response to a positive going edge of a driver current rises to a same value irrespective of a time duration of the driver current pulse, ie 1T, 2T, 3T or 4T. Ensuring that the magnetic field rises to a fixed value irrespective of the duration of the driver current pulse initiating the rising magnetic field reduces the occurrence of lateral displacement of changes in magnetization direction on the magnetic data storage medium. Minimizing relative lateral displacements between pulses recorded on magnetic data storage medium minimizes the occurrence of timing errors during a subsequent read operation and thereby minimizes the measured bit error rate.

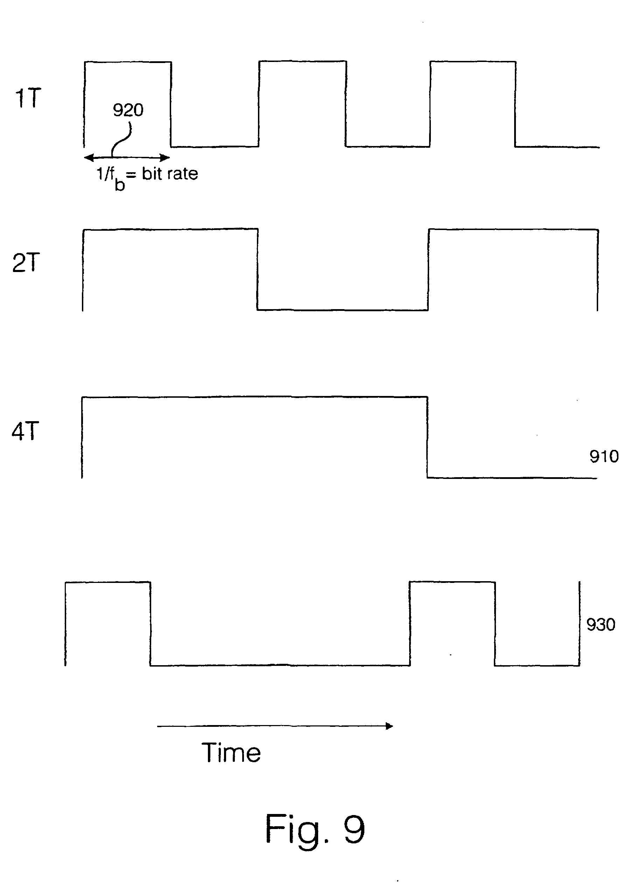

Referring to Fig. 9 herein, there is illustrated schematically low frequency 910 and pseudo-random 930 test signals used to calibrate the WPE driver. The low frequency test signal written to tape as part of the calibration procedure for the WPE driver is a "4T" pattern 910. The 4T pattern has a pulse duration of 4 x $f_b$ seconds where $1/f_b$ 920 is the bitrate at which data are written to tape during the normal operation of the tape data storage device described herein. The 4T pattern has a frequency which is one quarter of the maximum frequency which is written to tape. The 4T pattern should be of low enough frequency that, when writing to tape, it is unaffected by transient effects resulting from, for example, the finite rise time of the magnetic field in the write heads. Thus, the optimal values of the quality metrics derived from writing a 4T pattern to tape can be used as a standard for comparison with the quality metrics of writing mixed frequency test signals to tape.

According to the best mode described herein, the WPE driver has three independently adjustable variables, all of which must be optimized in order to optimally compensate for the roll-off of the write head. The three variables are: the value or amplitude of the pulse current, I_pulse 304; the value or amplitude of the main current, I-main 303; and the width of the pulse current, t_delay 620. The specific method as described herein comprises "removing" one of the variables by writing a 4T pattern to tape and optimizing the amplitudes of the main current 303. In this specification the process of optimization refers to finding the value of a variable which maximizes one or more quality metrics during a write operation. In a first embodiment of the present invention, having found the optimal main current driver value while writing a 4T pattern 910, and with the pulse current amplitude set to a minimum value, a high frequency 1T, bit pattern is recorded and an optimal pulse current is found. However, in a preferred embodiment of the present invention, having found the optimal main driver current value while writing a 4T pattern 910, and with the pulse current amplitude set to a minimum value, a mixed frequency, pseudo-random bit pattern 930 is recorded and an optimal pulse current amplitude is found. Thus, by fixing the main current level the parameter space that needs to be searched to find the optimal values of variable for the WPE method described herein may be significantly reduced.

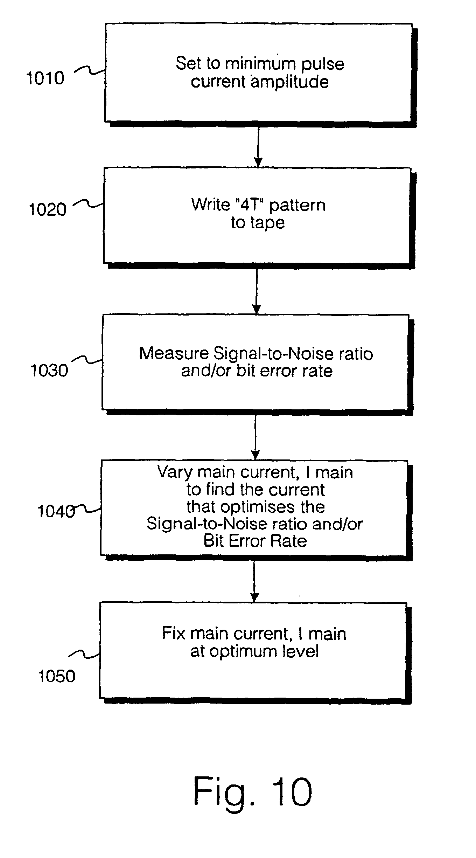

Referring to Fig. 10 herein, there is illustrated schematically a summary of steps involved in optimizing the main current amplitude 303 according to the best mode described herein. In step 1010, the amplitude of the pulse current, 304 is set to its respective minimum value. The width of the pulse current is set to a pre-determined fixed value. In step 1020, the data generator 800 is configured to output a 4T pattern. The main current, I-main, is set to its minimum value, and the 4T pattern is written to tape. In step 1030, the 4T pattern written to tape using write head 803 is read back from tape via write head 804. The low frequency 4T pattern is recovered from the data read off tape and the quality metrics signal-to-noise ratio and/or bit error rate associated with the value of the main driver current used to write the data are measured. In step 1040, the gain of amplifier 400 is increased and the low frequency 4T pattern is again written to tape. The quality metrics associated with the new, increased main current are measured and the process of changing the main current level, recording low frequency pattern to tape and measuring the quality metrics associated with that driver current are repeated until the main current level that maximizes SNR and/or minimizes BER is found. In step 1050, the main current is fixed at a level which optimizes the values for the quality metrics used to assess the write performance.

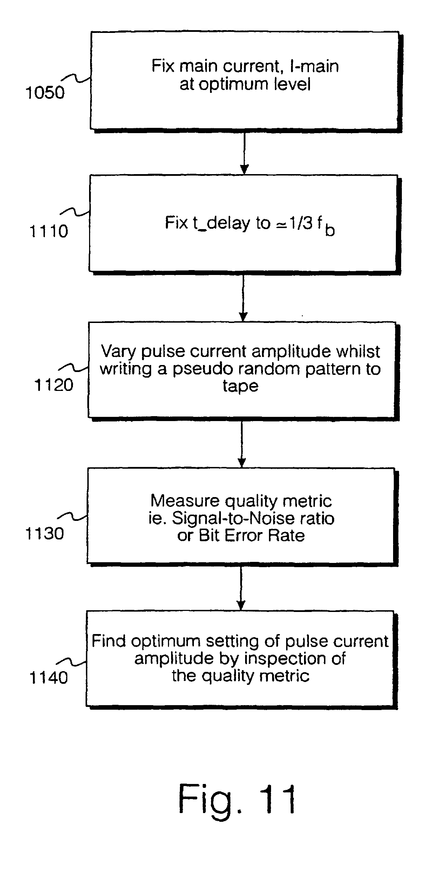

Referring to Fig. 11 herein, there is illustrated schematically a flow chart summarizing steps in calibrating the WPE driver whilst recording pseudo-random bit pattern to tape according to the best mode described herein. Preferably, a pseudo-random bit pattern used in calibrating the WPE driver comprises a pseudo-random mixture of 1T, 2T, 3T, 4T transitions. Thus the pseudo-random bit pattern contains a mix of frequencies. However, it will be understood by those skilled in the art that the invention is not limited to methods and apparatus using pseudo-random patterns to calibrate the WBE driver and that other random or quasi-periodic bit patterns could be employed. In step 1050, as described previously, the optimum level of main current, I-main, for recording low frequency, 4T, patterns to tape is found. In step 1110, the time delay t_delay which is the width of the pulse current is fixed at a value of the order $1/3\ f_b$ seconds where $f_b$ is the bit period at which data are written to tape according to the best mode described herein. Preferably, the bit period $f_b$ is 9 nanoseconds. It has been found experimentally that the pulse current, 303, and the width of the pulse current, t_delay, are not truly independent variables. Thus, it has been found that t_delay can be fixed at an optimal value and hence it only remains to find the value of the pulse current amplitude 303 which maximizes the quality metrics in order to complete the calibration of the WPE driver. Preferably, t_delay is set to of the order $1/5 - 4/5$ of the bit period $f_b$. In step 1120, the pulse current amplitude 303 is set to its minimum value and the generator 800 is configured to generate a pseudo-random bit pattern which is recorded to tape. In step 1130, the pseudo-random test signal is read back from tape and the quality metrics SNR and/or BER are measured for the mixed frequency test signal. In step 1140, the quality metrics are monitored as the pseudo-random bit pattern is recorded to tape whilst the pulse current amplitude is gradually increased. An optimal pulse current value which maximizes the quality metrics whilst recording a mixed frequency signal is found, completing the calibration of the WPE driver. One advantage of fixing the time delay of the delayed current to $^1/_3$ $f_b$ is that this reduces the number of combinations of variables and hence the time required to calibrate the WPE driver.

The specific method described herein above encompasses varying a single one of the three variables through a plurality of values whilst maintaining other ones of the variables at fixed values, and for each value of variable, determining a quality metric of a corresponding output of the write channel as written to tape. A value of variable which produces a write channel output which when written to tape and read by the read channel produces an optimum quality metric is selected.

**Claims**

1. A method of optimising a write channel in a data storage device, said write channel comprising:

   a first current source (400) operable to generate a first current signal (301) of a first current amplitude in response to an input signal;
   a delay device (402) operable to produce a delay signal corresponding to the input signal delayed by a delay period;
   a second current source (401) operable to generate a second current signal (302) of a second current amplitude in response to the delay signal; and
   a write head (204) having a frequency roll off (120) characteristic, with the write head operable to produce an output signal being a combination of the first current signal and the second current signal.

   wherein each of said first amplitude, said delay period and said second amplitude are variable, said method comprising the steps of:

   (i) varying (1040, 1120) a single said variable through a plurality of values whilst maintaining (1010, 1110) other ones of said variables at fixed values;
   (ii) for each said value of said plurality of values, determining (1030, 1130) a quality metric of a corresponding said output signal of said write channel; and
   (iii) selecting (1050, 1140) a said value of said plurality of values which produces a said write channel output having an optimum quality metric.

2. A method as claimed in claim 1, wherein each of said first amplitude, said delay period and said second amplitude are independently variable.

3. A method as claimed in claim 1 or 2, wherein said output signal of said write channel is produced in response to an input test signal, and said method comprises performing said steps (i), (ii) and (iii) for each of a plurality of test signals (910, 930);

4. A method as claimed in claim 1 or 2, wherein said step of determining a quality metric includes steps of:

   inputting a test signal to said write channel and writing a corresponding output signal of said write channel to a data storage medium, and reading said output signal from said data storage medium and determining a quality metric of said read output signal.

5. A method as claimed in any one of the preceding claims, wherein the step of determining the quality metric includes measuring a bit rate error or a signal-to-noise ratio.

6. A method as claimed in claim 4, wherein said first current signal comprises a main driver current and said second current signal comprises the main driver current delayed by said delay period.

7. A method as claimed in claim 6, wherein said step (i) includes:

   setting the amplitude of the delayed current to a minimum value;
   setting said delay period of the delayed current to a minimum value; and
   varying the amplitude of the main driver current over a range of amplitudes,

   wherein said test signal comprises a low frequency test signal, and said step (iii) comprises selecting an optimum amplitude of said main driver current.

8. A method as claimed in claim 7, wherein said step (i) comprises:

   setting the amplitude of the main driver current to its said optimum amplitude;
   setting said delay period of said delayed signal to a predetermined value; and
   varying the amplitude of said delayed current over a range of amplitudes,

wherein said test signal comprises a mixed frequency test signal and said step (iii) comprises selecting an optimum value of said delayed current.

9. A method as claimed in claim 7 or 8, wherein said low frequency test signal comprises a "4T" pattern.

10. A method as claimed in any of claims 7 to 9, wherein said predetermined value of said delay period is set in the range $1/5$ to $4/5$ of the minimum bit period at which said data are written to said data storage medium and suitably at around 1/3 of said minimum bit period.

11. A method as claimed in any one of claims 7 to 9, wherein said predetermined value of said delay period is set in the range 2 to 10 nanoseconds and suitably at around 3.5 nanoseconds.

12. A method as claimed in any one of claims 7 to 9, wherein said predetermined value of said delay period lies within the range 1.5 to 7.2 nanoseconds.

13. A method as claimed in any one of claims 8 to 12, wherein said mixed frequency test signal comprises a pseudo-random bit pattern.

14. A method as daimed in any of claims 8 to 13, wherein said mixed frequency test signal comprises a "1T" bit pattern.

15. A method as claimed in any one of the preceding claims, further including a step of combining said first and second current signals such that a frequency content of said combined first and second current signals at least partially compensates for a frequency response roll off (120) of said write head.

16. A method of writing data to a data storage medium through a write channel comprising a first transconductor, a delay device and a second transconductor, said method comprising the steps of:

receiving said data from a data source;
writing said data to a first transconductor (400), wherein a degree of amplification of said first transconductor is varied;
writing said same data to a delay device (402), wherein a delay time introduced by said delay device is varied;
writing said delayed data to a second transconductor (401), wherein a degree of amplification of said second transconductor is varied;
combining outputs of said first and said second transconductors;
writing said combined outputs to said data storage medium;
individually optimising each said variable in response to a measure of quality of said combined outputs as written to said data storage medium such that said write channel produces a minimum error rate.

17. A method as claimed in claim 16, wherein to perform said step of optimisation, said data is replaced by a test signal.

18. A method as claimed in claim 17, wherein a frequency of said test signal is varied.

19. A method as claimed in claim 16, 17 or 18, wherein said step of optimising said variables comprises the steps:

(a) setting said degree of amplification of said first transconductor (400) to a minimum value;
(b) setting said delay time introduced by said delay device (402) to a minimum;
(c) setting said degree of amplification of said second transconductor (401) to a minimum value;
(d) recording a low frequency test signal (910) to said data storage medium;
(e) reading said low frequency test signal from said data storage medium;
(f) monitoring a measure of said quality of said writing of said low frequency test signals;
(g) varying said degree of amplification of said first transconductor over a range of degrees of amplification;
(h) repeating steps (d), (e), (f) above at said varied degrees of amplification of said first transconductor;
(i) selecting an optimum degree of amplification of said first transconductor depending on a result of step (f);
(j) setting said delay time of said delay device to a predetermined value;
(k) recording a pseudo-random test signal (930) to said data storage medium;
(l) reading said pseudo-random test signal from said data storage medium;
(m) monitoring a measure of a quality of a said read pseudo-random frequency test signal;
(n) varying said degree of amplification of said second transconductor over a range of degrees of amplification;
(o) repeating steps (k), (l), (m) for each of a set of degrees of amplification of said second transconductor; and
(p) selecting an optimum value of said degree of amplification of said second transconductor as a result of step (m).

20. A method as claimed in any one of the proceeding claims, wherein said data storage medium comprises a magnetic tape.

21. A method as claimed in any one of the proceeding claims, wherein said data storage medium comprises a magnetic disk.

22. A data storage device configured to write data to a data storage medium, said data storage device having a write channel comprising:

a first current source (400) capable of generating a first current signal (301) of a first variable amplitude in response to input data signals;
a delay device (402) capable of delaying said data signals by a variable delay period;
a second current source (401) capable of generating a second current signal (302) of a second variable amplitude in response to said delayed data signals;
a means for combining (202) said first and second current signals;
a write head (208) for writing said combined first and second current signals to said data storage medium;
means for optimising said write channel such that a frequency content of said combined first and second current signals at least partially compensates for a frequency response roll off (120) of said write head, said optimisation being effected by individually optimising each of said variables of said first current amplitude, said second current amplitude and said delay period.

23. A data storage device as claimed in claim 22, wherein each said variable is adjustable independently of each other said variable.

**Patentansprüche**

1. Ein Verfahren zum Optimieren eines Schreibkanals in einer Datenspeichervorrichtung, wobei der Schreibkanal folgende Merkmale umfasst:

eine erste Stromquelle (400), die wirksam ist, um ansprechend auf ein Eingangssignal ein erstes Stromsignal (301) einer ersten Stromamplitude zu erzeugen;

eine Verzögerungsvorrichtung (402), die wirksam ist, um ein Verzögerungssignal zu erzeugen, das dem Eingangssignal entspricht, das um eine Verzögerungsperiode verzögert ist;

eine zweite Stromquelle (401), die wirksam ist, um ansprechend auf das Verzögerungssignal ein zweites Stromsignal (302) einer zweiten Stromamplitude zu erzeugen; und

einen Schreibkopf (204) mit einer Charakteristik eines Frequenzabfalls (120), wobei der Schreibkopf wirksam ist, um ein Ausgangssignal zu erzeugen, das eine Kombination des ersten Stromsignals und des zweiten Stromsignals ist,

wobei sowohl die erste Amplitude, die Verzögerungsperiode als auch die zweite Amplitude variabel sind, wobei das Verfahren folgende Schritte umfasst:

(i) Variieren (1040, 1120) einer einzigen der Variablen durch eine Mehrzahl von Werten, während andere der Variablen bei festen Werten beibehalten werden (1010, 1110);

(ii) für jeden der Werte der Mehrzahl von Werten, Bestimmen (1030, 1130) einer Qualitätsmetrik eines entsprechenden Ausgangssignals des Schreibkanals; und

(iii) Auswählen (1050, 1140) eines der Werte der Mehrzahl von Werten, der ein Schreibkanalausgangssignal mit einer optimalen Qualitätsmetrik erzeugt.

2. Ein Verfahren gemäß Anspruch 1, bei dem sowohl die erste Amplitude, die Verzögerungsperiode als auch die zweite Amplitude unabhängig variabel sind.

3. Ein Verfahren gemäß Anspruch 1 oder 2, bei dem das Ausgangssignal des Schreibkanals ansprechend auf ein Eingangstestsignal erzeugt wird, und das Verfahren das Durchführen der Schritte (i), (ii) und (iii) für jedes einer Mehrzahl von Testsignalen (910, 930) umfasst.

4. Ein Verfahren gemäß Anspruch 1 oder 2, bei dem der Schritt des Bestimmens einer Qualitätsmetrik folgende Schritte umfasst:

Eingeben eines Testsignals in den Schreibkanal und Schreiben eines entsprechenden Ausgangssignals des Schreibkanals in ein Datenspeichermedium, und

Lesen des Ausgangssignals von dem Datenspeichermedium und Bestimmen einer Qualitätsmetrik des gelesenen Ausgangssignals.

5. Ein Verfahren gemäß einem der vorhergehenden Ansprüche, bei dem der Schritt des Bestimmens der Qualitätsmetrik das Messen eines Bitratenfehlers oder eines Signal/Rausch-Verhältnisses umfasst.

**6.** Ein Verfahren gemäß Anspruch 4, bei dem das erste Stromsignal einen Haupttreiberstrom umfasst und das zweite Stromsignal den Haupttreiberstrom verzögert um die Verzögerungsperiode umfasst.

**7.** Ein Verfahren gemäß Anspruch 6, bei dem der Schritt (i) folgende Schritte umfasst:

Einstellen der Amplitude des verzögerten Stroms auf einen minimalen Wert;

Einstellen der Verzögerungsperiode des verzögerten Stroms auf einen minimalen Wert; und

Variieren der Amplitude des Haupttreiberstroms über einen Bereich von Amplituden,

wobei das Testsignal ein Niederfrequenztestsignal umfasst, und der Schritt (iii) das Auswählen einer optimalen Amplitude des Haupttreiberstroms umfasst.

**8.** Ein Verfahren gemäß Anspruch 7, bei dem der Schritt (i) folgende Schritte umfasst:

Einstellen der Amplitude des Haupttreiberstroms auf seine optimale Amplitude;

Einstellen der Verzögerungsperiode des verzögerten Signals auf einen vorbestimmten Wert; und

Variieren der Amplitude des verzögerten Stroms über einen Bereich von Amplituden,

wobei das Testsignal ein Mischfrequenztestsignal umfasst, und der Schritt (iii) das Auswählen eines optimalen Werts des verzögerten Stroms umfasst.

**9.** Ein Verfahren gemäß Anspruch 7 oder 8, bei dem das Niederfrequenztestsignal ein "4T"-Muster umfasst.

**10.** Ein Verfahren gemäß einem der Ansprüche 7 bis 9, bei dem der vorbestimmte Wert der Verzögerungsperiode in dem Bereich von 1/5 bis 4/5 der minimalen Bitperiode eingestellt ist, mit der die Daten in das Datenspeichermedium geschrieben werden, und angemessen bei etwa einem Drittel der minimalen Bitperiode.

**11.** Ein Verfahren gemäß einem der Ansprüche 7 bis 9, bei dem der vorbestimmte Wert der Verzögerungsperiode in dem Bereich 2 bis 10 Nanosekunden und angemessen bei etwa 3,5 Nanosekunden eingestellt ist.

**12.** Ein Verfahren gemäß einem der Ansprüche 7 bis 9, bei dem der vorbestimmte Wert der Verzögerungsperiode in dem Bereich 1,5 bis 7,2 Nanosekunden liegt.

**13.** Ein Verfahren gemäß einem der Ansprüche 8 bis 12, bei dem das Mischfrequenztestsignal ein Pseudozufallsbitmuster umfasst.

**14.** Ein Verfahren gemäß einem der Ansprüche 8 bis 13, bei dem das Mischfrequenztestsignal ein "1T"-Bitmuster umfasst.

**15.** Ein Verfahren gemäß einem der vorhergehenden Ansprüche, das ferner einen Schritt des Kombinierens des ersten und des zweiten Stromsignals umfasst, so dass ein Frequenzinhalt des kombinierten ersten und zweiten Stromsignals zumindest teilweise einen Frequenzansprechabfall (120) des Schreibkopfs ausgleicht.

**16.** Ein Verfahren zum Schreiben von Daten in ein Datenspeichermedium durch einen Schreibkanal, der ein erstes Transkonduktanz-Element, eine Verzögerungsvorrichtung und ein zweites Transkonduktanz-Element umfasst, wobei das Verfahren folgende Schritte umfasst:

Empfangen der Daten von einer Datenquelle;

Schreiben der Daten in ein erstes Transkonduktanz-Element (440), wobei ein Verstärkungsgrad des ersten Transkonduktanz-Elements schwankt;

Schreiben der gleichen Daten in eine Verzögerungsvorrichtung (402), wobei eine Verzögerungszeit, die durch die Verzögerungsvorrichtung eingebracht wird, schwankt;

Schreiben der verzögerten Daten in ein zweites Transkonduktanz-Element (401), wobei ein Verstärkungsgrad des zweiten Transkonduktanz-Elements schwankt;

Kombinieren von Ausgangssignalen des ersten und des zweiten Transkonduktanz-Elements;

Schreiben der kombinierten Ausgangssignale in das Datenspeichermedium;

einzelnes Optimieren jeder der Variablen ansprechend auf eine Qualitätsmessung der kombinierten Ausgangssignale, wie sie in das Datenspeichermedium geschrieben werden, so dass der Schreibkanal eine minimale Fehlerrate erzeugt.

**17.** Ein Verfahren gemäß Anspruch 16, bei dem zum Durchführen des Schrittes der Optimierung die Daten durch ein Testsignal ersetzt werden.

**18.** Ein Verfahren gemäß Anspruch 17, bei dem eine Frequenz des Testsignals schwankt.

**19.** Ein Verfahren gemäß Anspruch 16, 17 oder 18, bei dem der Schritt zum Optimieren der Variablen folgende Schritte umfasst:

(a) Einstellen des Verstärkungsgrads des ersten Transkonduktanz-Elements (400) auf einen minimalen Wert;

(b) Einstellen der Verzögerungszeit, die durch die Verzögerungsvorrichtung (402) eingebracht wird, auf ein Minimum;

(c) Einstellen des Verstärkungsgrads des zweiten Transkonduktanz-Elements (401) auf einen minimalen Wert;

(d) Aufzeichnen eines Niederfrequenztestsignals (910) auf das Datenspeichermedium;

(e) Lesen des Niederfrequenztestsignals von dem Datenspeichermedium;

(f) Überwachen einer Messung der Qualität des Schreibens der Niederfrequenztestsignale;

(g) Variieren des Verstärkungsgrads des ersten Transkonduktanz-Elements über einen Bereich von Verstärkungsgraden;

(h) Wiederholen der Schritte (d), (e), (f) über die variierten Verstärkungsgrade des ersten Transkonduktanz-Elements;

(i) Auswählen eine optimalen Verstärkungsgrads des ersten Transkonduktanz-Elements abhängig von einem Ergebnis von Schritt (f);

(j) Einstellen der Verzögerungszeit der Verzögerungsvorrichtung auf einen vorbestimmten Wert;

(k) Aufzeichnen eines Pseudozufallstestsignals (930) auf das Datenspeichermedium;

(l) Lesen des Pseudozufallstestsignals von dem Datenspeichermedium;

(m) Überwachen einer Qualitätsmessung des gelesenen Pseudozufallstestsignals;

(n) Variieren des Verstärkungsgrads des zweiten Transkonduktanz-Elements über einen Bereich von Verstärkungsgraden;

(o) Wiederholen der Schritte (k) (l), (m) für jeden eines Satzes von Verstärkungsgraden des zweiten Transkonduktanz-Elements; und

(p) Auswählen eines optimalen Werts des Verstärkungsgrads des zweiten Transkonduktanz-Elements als ein Ergebnis von Schritt (m).

**20.** Ein Verfahren gemäß einem der vorhergehenden Ansprüche, bei dem das Datenspeichermedium ein Magnetband umfasst.

**21.** Ein Verfahren gemäß einem der vorhergehenden Ansprüche, bei dem das Datenspeichermedium eine Magnetplatte umfasst.

**22.** Eine Datenspeichervorrichtung, die konfiguriert ist, um Daten in ein Datenspeichermedium zu schreiben, wobei die Datenspeichervorrichtung einen Schreibkanal aufweist, der folgende Merkmale umfasst:

eine erste Stromquelle (400), die in der Lage ist, ansprechend auf Eingangsdatensignale ein erstes Stromsignal (301) einer ersten variablen Amplitude zu erzeugen;

eine Verzögerungsvorrichtung (402), die in der Lage ist, die Datensignale um eine variable Verzögerungsperiode zu verzögern;

eine zweite Stromquelle (401), die in der Lage ist, ansprechend auf die verzögerten Datensignale ein zweites Stromsignal (302) einer zweiten variablen Amplitude zu erzeugen;

eine Einrichtung zum Kombinieren (202) des ersten und des zweiten Stromsignals;

einen Schreibkopf (208) zum Schreiben des kombinierten ersten und zweiten Stromsignals in das Datenspeichermedium;

eine Einrichtung zum Optimieren des Schreibkanals, so dass ein Frequenzinhalt des kombinierten ersten und zweiten Stromsignals zumindest teilweise einen Frequenzantwortabfall (120) des Schreibkopfs ausgleicht, wobei die Optimierung durch einzelnes Optimieren von jeder der Variablen der ersten Stromamplitude, der zweiten Stromamplitude und der Verzögerungsperiode bewirkt wird.

**23.** Eine Datenspeichervorrichtung gemäß Anspruch 22, bei der jede der Variablen unabhängig von jeder anderen Variablen einstellbar ist.

**Revendications**

1. Procédé d'optimisation d'un canal d'écriture dans un dispositif de stockage de données, ledit canal d'écriture comprenant :

    une première source de courant (400) utilisable pour générer un premier signal de courant (301) d'une première amplitude de courant en réponse à un signal d'entrée ;

    un dispositif de retardement (402) utilisable pour produire un signal de retard correspondant au signal d'entrée retardé d'une période de retard ;

    une seconde source de courant (401) utilisable pour générer un second signal de courant (302) d'une seconde amplitude de courant en réponse au signal de retard ; et

    une tête d'écriture (204) présentant une caractéristique d'affaiblissement de fréquence (120), la tête d'écriture étant utilisable pour produire un signal de sortie étant une combinaison du premier signal de courant et du second signal de courant,

    dans lequel chacune de ladite première amplitude, ladite période de retard et ladite seconde amplitude sont variables, ledit procédé comprenant les étapes consistant à :

    (i) faire varier (1040, 1120) une seule desdites variables sur une pluralité de valeurs tout en maintenant (1010, 1110) les autres desdites variables à des valeurs fixes ;

    (ii) pour chacune desdites valeurs de ladite pluralité de valeurs, déterminer (1030, 1130) une mesure de qualité d'un desdits signaux de sortie correspondant dudit canal d'écriture ; et

    (iii) sélectionner (1050, 1140) une desdites valeurs de ladite pluralité de valeurs qui produit ladite sortie de canal d'écriture présentant une mesure de qualité optimale.

2. Procédé selon la revendication 1, dans lequel chacune de ladite première amplitude, ladite période de retard et ladite seconde amplitude sont indépendamment variables.

3. Procédé selon la revendication 1 ou 2, dans lequel ledit signal de sortie dudit canal d'écriture est produit en réponse à un signal de test d'entrée, et ledit procédé comprend la réalisation desdites étapes (i), (ii) et (iii) pour chacun d'une pluralité de signaux de test (910, 930).

4. Procédé selon la revendication 1 ou 2, dans lequel ladite étape de détermination d'une mesure de qualité comprend les étapes consistant à :

    entrer un signal de test dans ledit canal d'écriture et écrire un signal de sortie correspondant dudit canal d'écriture sur un support de stockage de données, et

    lire ledit signal de sortie depuis ledit support de stockage de données et déterminer une mesure de qualité dudit signal de sortie lu.

5. Procédé selon l'une quelconque des revendications précédentes, dans lequel l'étape de détermination de la mesure de qualité comprend la mesure d'un taux d'erreurs sur les bits ou d'un rapport signal/bruit.

6. Procédé selon la revendication 4, dans lequel ledit premier signal de courant comprend un courant pilote principal et ledit second signal de courant comprend le courant pilote principal retardé de ladite période de retard.

7. Procédé selon la revendication 6, dans lequel ladite étape (i) comprend :

    la fixation de l'amplitude du courant retardé sur une valeur minimum ;

    la fixation de ladite période de retard du courant retardé sur une valeur minimum ; et

    la variation de l'amplitude du courant pilote principal sur une plage d'amplitudes,

    dans lequel ledit signal de test comprend un signal de test basse fréquence, et ladite étape (iii) comprend la sélection d'une amplitude optimale dudit courant pilote principal.

8. Procédé selon la revendication 7, dans lequel ladite étape (i) comprend :

    la fixation de l'amplitude du courant pilote principal sur sa dite amplitude optimale ;

    la fixation de ladite période de retard dudit signal retardé sur une valeur prédéterminée ; et

    la variation de l'amplitude dudit courant retardé sur une plage d'amplitudes,

dans lequel ledit signal de test comprend un signal de test en fréquence mélangé et ladite étape (iii) comprend la sélection d'une valeur optimale dudit courant retardé.

**9.** Procédé selon la revendication 7 ou 8, dans lequel ledit signal de test basse fréquence comprend un schéma « 4T ».

**10.** Procédé selon l'une quelconque des revendications 7 à 9, dans lequel ladite valeur prédéterminée de ladite période de retard est fixée dans la plage de 1/5 à 4/5 de la période binaire minimum à laquelle lesdites données sont écrites sur ledit support de stockage de données et de manière appropriée à environ 1/3 de ladite période binaire minimum.

**11.** Procédé selon l'une quelconque des revendications 7 à 9, dans lequel ladite valeur prédéterminée de ladite période de retard est fixée dans la plage de 2 à 10 nanosecondes et de manière appropriée à environ 3,5 nanosecondes.

**12.** Procédé selon l'une quelconque des revendications 7 à 9, dans lequel ladite valeur prédéterminée de ladite période de retard se situe dans la plage de 1,5 à 7,2 nanosecondes.

**13.** Procédé selon l'une quelconque des revendications 8 à 12, dans lequel ledit signal de test en fréquence mélangée comprend un schéma binaire pseudo-aléatoire.

**14.** Procédé selon l'une quelconque des revendications 8 à 13, dans lequel ledit signal de test en fréquence mélangée comprend un schéma binaire « 1T ».

**15.** Procédé selon l'une quelconque des revendications précédentes, comprenant en outre une étape de combinaison desdits premier et second signaux de courant de manière à ce qu'un contenu de fréquence desdits premier et second signaux de courant combinés compense au moins partiellement un affaiblissement de réponse en fréquence (120) de ladite tête d'écriture.

**16.** Procédé d'écriture de données sur un support de stockage de données au moyen d'un canal d'écriture comprenant un premier transducteur, un dispositif de retardement et un second transducteur, ledit procédé comprenant les étapes de :

réception desdites données depuis une source de données ;

écriture desdites données sur un premier transducteur (400), dans laquelle un degré d'amplification dudit premier transducteur est modifié ;

écriture desdites mêmes données sur un dispositif de retardement (402), dans laquelle un temps de retard introduit par ledit dispositif de retardement est modifié ;

écriture desdites données retardées sur un second transducteur (401), dans laquelle un degré d'amplification dudit second transducteur est modifié ;

combinaison des sorties desdits premier et second transducteurs ;

écriture desdites sorties combinées sur ledit support de stockage de données ;

optimisation individuelle de chacune desdites variables en réponse à une mesure de qualité desdites sorties combinées telles qu'écrites sur ledit support de stockage de données de manière à ce que ledit canal d'écriture produise un taux d'erreurs minimum.

**17.** Procédé selon la revendication 16, dans lequel pour effectuer ladite étape d'optimisation, ladite donnée est remplacée par un signal de test.

**18.** Procédé selon la revendication 17, dans lequel une fréquence dudit signal de test est modifiée.

**19.** Procédé selon la revendication 16, 17 ou 18, dans lequel ladite étape d'optimisation desdites variables comprend les étapes de :

(a) fixation dudit degré d'amplification dudit premier transducteur (400) sur une valeur minimum ;

(b) fixation dudit temps de retard introduit par ledit dispositif de retardement (402) sur une valeur minimum ;

(c) fixation dudit degré d'amplification dudit second transducteur (401) sur une valeur minimum ;

(d) enregistrement d'un signal de test (910) basse fréquence sur ledit support de stockage de données ;

(e) lecture dudit signal de test basse fréquence depuis ledit support de stockage de données ;

(f) contrôle d'une mesure de ladite qualité de ladite écriture desdits signaux de test basse fréquence ;

(g) variation dudit degré d'amplification dudit premier transducteur sur une plage de degrés d'amplification ;

(h) répétition des étapes (d), (e), (f) ci-dessus auxdits degrés variés d'amplification dudit premier transducteur ;

(i) sélection d'un degré optimal d'amplification dudit premier transducteur en fonction d'un résultat à l'étape (f) ;

(j) réglage dudit temps de retard dudit dispositif de retardement sur une valeur prédéterminée ;

(k) enregistrement d'un signal de test (930) pseudo-aléatoire sur ledit support de stockage de données ;

(l) lecture dudit signal de test pseudo-aléatoire depuis ledit support de stockage de données ;

(m) contrôle d'une mesure de qualité d'un dit signal de test pseudo-aléatoire lu ;

(n) variation dudit degré d'amplification dudit second transducteur sur une plage de degrés d'amplification ;

(o) répétition des étapes (k), (l), (m) pour chacun d'un ensemble de degrés d'amplification dudit second transducteur ; et

(p) sélection d'une valeur optimale dudit degré d'amplification dudit second transducteur en résultat de l'étape (m).

20. Procédé selon l'une quelconque des revendications précédentes, dans lequel ledit support de stockage de données comprend une bande magnétique.

21. Procédé selon l'une quelconque des revendications précédentes, dans lequel ledit support de stockage de données comprend un disque magnétique.

22. Dispositif de stockage de données configuré pour écrire des données sur un support de stockage de données, ledit dispositif de stockage de données possédant un canal d'écriture comprenant :

une première source de courant (400) capable de générer un premier signal de courant (301) d'une première amplitude variable en réponse à des signaux de données d'entrée ;

un dispositif de retardement (402) capable de retarder lesdits signaux de données d'une période de retard variable ;

une seconde source de courant (401) capable de générer un second signal de courant (302) d'une seconde amplitude variable en réponse auxdits signaux de données retardés ;

des moyens de combinaison (202) desdits premier et second signaux de courant ;

une tête d'écriture (208) destinée à écrire lesdits premier et second signaux de courant combinés sur ledit support de stockage de données ;

des moyens d'optimisation dudit canal d'écriture de manière à ce qu'un contenu en fréquence desdits premier et second signaux de courant combinés compense au moins partiellement un affaiblissement de la réponse en fréquence (120) de ladite tête d'écriture, ladite optimisation étant réalisée en optimisant individuellement chacune desdites variables de ladite première amplitude de courant, ladite seconde amplitude de courant, et ladite période de retard.

23. Dispositif de stockage de données selon la revendication 22, dans lequel chacune desdites variables est ajustable indépendamment de chacune des autres dites variables.

## Fig. 1
## (PRIOR ART)

## Fig. 2

Fig. 3

Fig. 4

Fig. 5

Fig. 6

Host data → Amplify/Buffer host data signals **700** → Amplified host data signal → Summate host data signals and delayed inverted host data signals **704** → Modified write signal → Write to data storage media via write head **705**

Delay host data signals **701** → Amplify/Buffer delayed data signals **702** → Invert delayed data signals **703** → Inverted delayed amplified data signals

Fig. 7

EP 0 959 470 B1

Fig. 8

1T

920

1/f$_b$ = bit rate

2T

4T

910

930

Time

Fig. 9

1010 — Set to minimum pulse current amplitude

1020 — Write "4T" pattern to tape

1030 — Measure Signal-to-Noise ratio and/or bit error rate

1040 — Vary main current, I main to find the current that optimises the Signal-to-Noise ratio and/or Bit Error Rate

1050 — Fix main current, I main at optimum level

Fig. 10

```
┌─────────────────────────────────┐
│       Fix main current, I-main  │
│         at optimum level        │
└─────────────────────────────────┘
                 │
                 ▼
┌─────────────────────────────────┐
│     Fix t_delay to ≈1/3 f_b     │
└─────────────────────────────────┘
                 │
                 ▼
┌─────────────────────────────────┐
│  Vary pulse current amplitude   │
│   whilst writing a pseudo       │
│   random pattern to tape        │
└─────────────────────────────────┘
                 │
                 ▼
┌─────────────────────────────────┐
│      Measure quality metric     │
│     ie. Signal-to-Noise ratio   │
│        or Bit Error Rate        │
└─────────────────────────────────┘
                 │
                 ▼
┌─────────────────────────────────┐
│  Find optimum setting of pulse  │
│  current amplitude by           │
│  inspection of the quality      │
│  metric                         │
└─────────────────────────────────┘
```

- 1050 — Fix main current, I-main at optimum level
- 1110 — Fix t_delay to $\approx 1/3\, f_b$
- 1120 — Vary pulse current amplitude whilst writing a pseudo random pattern to tape
- 1130 — Measure quality metric ie. Signal-to-Noise ratio or Bit Error Rate
- 1140 — Find optimum setting of pulse current amplitude by inspection of the quality metric

Fig. 11